# EUROPÄISCHE PATENTSCHRIFT

(11) **EP 0 573 504 B1**
(45) Veröffentlichungstag und Bekanntmachung des Hinweises auf die Patenterteilung: **03.01.1996**
(21) Anmeldenummer: 92905572.1
(22) Anmeldetag: 27.02.1992
(51) Int. Cl.: H02K 7/18

(54) **STROMERZEUGER MIT KERNKÜHLUNG**
POWER-GENERATOR UNIT WITH COOLED CORE
GENERATRICE ELECTRIQUE AVEC REFROIDISSEMENT DU NOYAU

(30) Priorität: 01.03.1991 DE 4106497
(43) Veröffentlichungstag der Anmeldung: 15.12.1993
(73) Patentinhaber: CHAKATEC GBR, D-26802 Moormerland (DE)
(72) Erfinder: Wirges, Gerhard O., 22175 Hamburg (DE)
(74) Vertreter: Vonnemann, Gerhard, Dr.-Ing.
(86) Internationale Anmeldenummer: EP9200412
(87) Internationale Veröffentlichungsnummer: WO9216042

(56) Entgegenhaltungen:
- DE-A- 3 534 507
- DE-U- 8 601 003
- US-A- 3 046 899
- US-A- 4 486 668
- US-A- 4 827 147
- PATENT ABSTRACTS OF JAPAN vol. 1, no. 20 (E-76) 24 März 1977 & JP,A, 51 118 028

## Beschreibung

Die Erfindung betrifft einen Stromerzeuger, insbesondere für Fahrzeuge, bestehend aus koaxial auf einer Welle angeordnetem flüssigkeitsgekühlten Generator und einem flüssigkeitsgekülhten Verbrennungsmotor als Antriebsmotor sowie einer Pumpe für das flüssige Kühlmittel.

Ein solcher Stromerzeuger ist in dem deutschen Gebrauchsmuster G 86 01 003 beschrieben. Die zur Kühlung erforderliche Wasserpumpe ist außen am Motor leicht für die Wartung zugänglich angeordnet.

In der amerikanischen Schrift US-PS 4,827,147 ist ein luftgekühlter Stromerzeuger beschrieben. Stromerzeuger dieses Typs weisen den Vorteil auf, das die Lüfterräder keiner Wartung bedürfen. Sie sind aber nachteilig laut. Zur Vermeidung zweier getrennter Lüfterräder ist ein einziges, doppelt wirkendes Lüfterrad zwischen Motor und Generator angeordnet. In zwei Teilströmen wird frische Kühlluft getrennt über Motor und Generator angesaugt und gemeinsam ausgestoßen. Dadurch wird mit einem Lüfterrad die Wirkung von zwei getrennten Lüftern erreicht.

Außerdem beschreibt US-PS 4,486,668 einen Generator mit einer Vakuumpumpe, die zwischen einer antreibenden Keilriemenscheibe und dem Generator angeordnet ist. Durch den Riementrieb ist die Pumpe leicht zugänglich. Eine koaxiale Anordnung von Motor- und Generatorwelle wurde somit vermieden. Der Generator ist nicht mit Flüssigkeit geküht. Die Pumpe dient nicht der Kühlung.

Die DE 35 34 507 A1 beschreibt schließlich eine Brennkraftmaschine mit einer Kühlwasserpumpe, die einen Magnetläufer aufweist. Die Pumpe ist leicht zugänglich.

Den bekannten Stromerzeugern ist der Nachteil gemeinsam, daß die Ankerwellenlager oder Antriebsmotorwellenlager besonders bei beengten Platzverhältnissen versagen, was die Betriebssicherheit beeinträchtigt.

Der Erfindung liegt die Aufgabe zugrunde, die Betriebssicherheit zu erhöhen.

Die Aufgabe wird durch die Merkmale des Anspruchs 1 gelöst.

Es ist vorgesehen, daß die Kühlmittelpumpe zwischen dem Generator und dem Antriebsmotor angeordnet ist. Durch diese Maßnahme wirkt die Kühlung auf beide Aggregate. Die Anordnung ist platzsparend und ergibt einen vorteilhaft großen Temperaturgradienten zum kälteren Wellenabschnitt, auf dem die Kühlmittelpumpe angeordnet ist.

Dadurch wird sowohl die am Anker des Stromerzeugers erzeugte Wärme über die Generatorwelle als auch die Wärme aus der Kurbelwelle des Antriebsmotors direkt zur thermischen Senke, der Kühlmittelpumpe, geführt. Ein thermisches Versagen der Wellenlager wird damit verhindert. Die Lebensdauer der Aggregate verlängert sich entsprechend. Die erfindungsgemäße Kühlung des Generators erlaubt es, von einer Luftkühlung des Stromerzeugers abzusehen. Damit verringern sich vorteilhaft die Abmessungen des Stromerzeugers.

Da die Kühlmittelpumpe auf der Welle angeordnet ist, können bei dem erfindungsgemäßen Stromerzeuger die Keilriemen für externe Kühlmittelpumpen entfallen. Die Verletzungsgefahr durch am Stromerzeuger angeordnete drehende Teile wird folglich gemindert.

Ferner ist vorgesehen, daß die Welle aus Generatorwelle, Pumpenwelle und Antriebsmotorwelle besteht, wobei diese miteinander fluchtend verbunden sind. Damit ist die Kühlvorrichtung leicht vom Generator bzw. Antriebsmotor zu trennen. Die Wartungsfreundlichkeit wird verbessert. In einer Modulbauweise lassen sich Stromerzeuger je nach Einsatzzweck und Rahmenbedingungen stückweise zusammensetzen, so daß sich Bevorratungskosten bzw. Lieferzeiten vorteilhaft verringern. Trotz des modularen Aufbaus des Generators erfolgt die Ableitung der im Anker des Generators erzeugten Wärme von der Ankerwelle über einen großflächigen thermischen Kontakt mit der Pumpenwelle.

Dadurch, daß die Verbindung zwischen Anker- und Pumpenwelle als selbstzentrierender Konuspaßsitz ausgebildet ist, wird die Pumpenwelle mit der Ankerwelle selbstzentrierend ausgerichtet. Eine Dejustierung und ein damit zusammenhängender hoher Lagerverschleiß wird vermieden.

In Ausgestaltung der Erfindung ist vorgesehen, daß die Kühlmittelpumpe als Magnetläuferpumpe ausgebildet ist. Damit wird der Stromerzeuger besonders wartungsfreundlich, da drehende Dichtflächen bzw. Dichtungen gänzlich vermieden werden. Zudem wird das Bauvolumen weiter verringert, da eine Magnetläuferpumpe in axialer Richtung geringe Ausdehnung hat.

Wenn die Magnetläuferpumpe ein als Magnetläufer ausgebildetes Schaufellaufrad und ein feststehendes Pumpengehäuse mit daran angeschlossener Kühlmittelsaug-und -druckleitung aufweist, wird das Kühlmittel in möglichst einfacher Weise gefördert. Vorzugsweise werden die Kühlmittelsaugleitung und die Kühlmittelförderleitung in radialer Richtung an der Gehäuseaußenfläche angebracht. Der Leitungsanschluß erfordert damit keinen zusätzlichen Platzbedarf in axialer Richtung. Ferner sind die Kühlmittelleitungsanschlüsse für Wartungszwecke leicht zugänglich.

Dadurch, daß zwischen Pumpengehäuse und der Welle eine Gleitbuchse zur Leitung der Wärme von der Welle in das Pumpengehäuse angeordnet ist, wird die im Generator und Antriebsmotor erzeugte und auf die Welle abgegebene Wärme besonders effektiv durch Wärmeleitung an das feststehende Pumpengehäuse übertragen. Die Wärmeübertragung zum Pumpengehäuse wird durch den relativ hohen Temperaturgradienten zwischen Welle und Kühlmittel erhöht. Vorteilhaft wird zwischen der Gleitbuchse und der Welle ein thermisches Gleitfett eingebracht, um die Wärmeleitung weiter zu verbessern.

In weiterer Ausgestaltung der Erfindung ist vorgesehen, daß die Kühlmittelpumpe eine Kreiselpumpe, insbesondere eine selbstansaugende Kreiselpumpe, ist. Dieser Pumpentyp ist besonders robust und auch unempfindlich bei Trockenlauf.

In weiterer Ausgestaltung der Erfindung ist vorgesehen, daß die Kühlmittelpumpe ein feststehendes Pumpengehäuse mit Kühlmittelsaug- und -förderleitung und ein drehfest mit der Pumpenwelle verbundenes Schaufellaufrad aufweist, wobei die Kühlmittelsaugleitung in einer senkrecht zur Pumpenwelle liegenden Ebene in das Pumpengehäuse bis an den radial innenliegenden Bereich des Schaufellaufrades hineinführt. Die Kühlmittelsaugleitung ist damit in radialer bis tangentialer Richtung im Pumpengehäuse angeordnet und führt bis an den inneren Schaufellaufraddurchmesser. Von dort wird das Kühlmittel durch das sich drehende Schaufellaufrad zentrifugal nach außen beschleunigt und über die Kühlmittelförderleitung im Außenbereich des Gehäuses herausgeführt. Die Kühlmittelpumpe kann damit vorteilhaft platzsparend zwischen Antriebsmotor und Generator angeordnet werden, ohne daß bei Kreiselpumpen gewöhnlich axial zugeführte Ansaugleitungen eine sowohl thermisch als auch lagerungstechnisch ungünstige Verlängerung der Welle bedingen würden.

Dadurch, daß das Pumpengehäuse aus einem Pumpenmittelteil und zwei, vorzugsweise identischen, Pumpendeckeln zusammengesetzt ist, läßt sich die Pumpe kostengünstig herstellen. Insbesondere mit der Maßnahme, daß die Kühlmittelsaug- und -förderleitung im Pumpenmittelteil angeordnet sind, wird die Ersatzteilbevorratung verringert.

Es ist ferner vorgesehen, daß das Pumpenmittelteil vorzugsweise aus Edelstahl und die Pumpendeckel aus Polyamid hergestellt sind. Dadurch ergibt sich einerseits ein geringeres Gewicht des Pumpengehäuses und andererseits eine verbesserte thermische Isolierung, bei der die von der Pumpenwelle auf das Kühlmittel übertragene Wärme wirkungsvoll aus dem Generatorbereich abgeführt wird. Das Edelstahlpumpengehäuse ist praktisch wartungsfrei.

Die genannten Vorteile führen dazu, daß der Stromerzeuger geringere Abmessungen hat und einen höheren Leistungsfaktor besitzt.

Zwei Ausführungsbeispiele der Erfindung sind in Zeichnungen dargestellt und im folgenden näher beschrieben.

Es zeigen:
- Figur 1: einen Längsschnitt eines Stromerzeugers mit Antriebsmotor und Generator mit dazwischen anaeordneter Kreiselpumpe und
- Figur 2: einen Querschnitt eines Pumpenmittelteils der Kreiselpumpe entlang der Linie 2-2 in Fig. 1 und
- Figur 3: einen schematisierten Längsschnitt eines Stromerzeugers mit Antriebsmotor und Generator mit dazwischen angeordneter Magnetläuferpumpe.

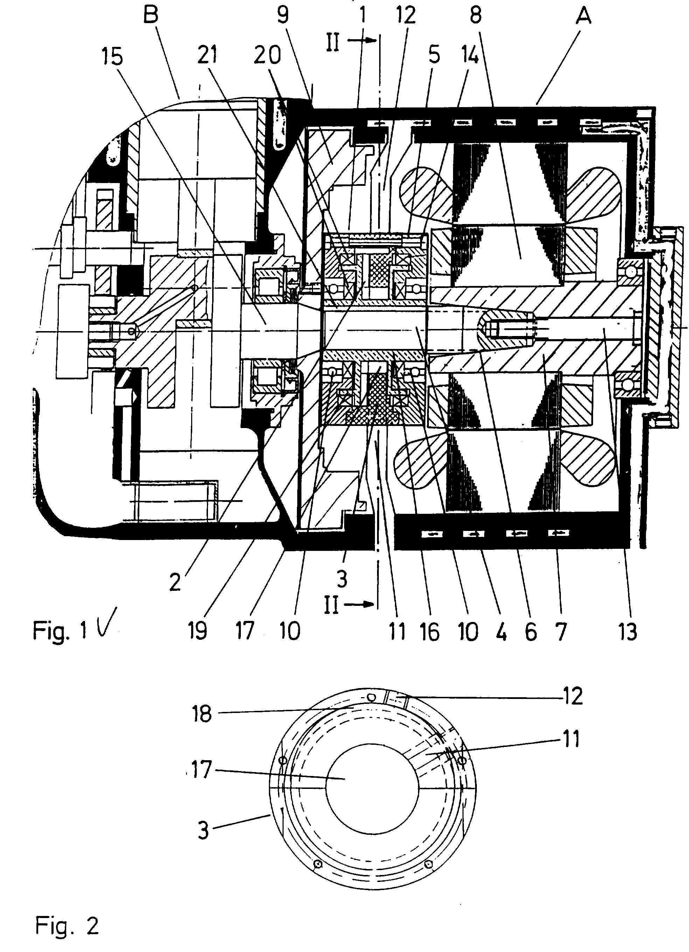

Figur 1 zeigt eine Stromerzeuger, der einen Antriebsmotor B und einen Generator A aufweist. Zwischen Generatoranker 8 des Generators A und Schwungmasse 9 des Antriebsmotors B ist eine Kreiselpumpe 1 auf gemeinsamer Welle (4, 7, 15) angeordnet.

Die Welle (4, 7, 15) ist in drei Abschnitte, eine Generatorwelle 7, eine Pumpenwelle 4 und eine Antriebsmotorwelle 15 geteilt. Die Generatorwelle 7 und die Pumpenwelle 4 sind über einen Konuspaßsitz 6, der mit einer in Achslinie der Ankerwelle 7 angeordneten Schraube 13 verspannt wird, verbunden. Die so fest verbundenen Wellenabschnitte sind dadurch genau ausgerichtet und über die Oberfläche des Konuspaßsitzes 6 thermisch miteinander gekoppelt.

Auf der Pumpenwelle 4 ist ein Schaufellaufrad 2 drehfest durch eine Feder-Nut-Verbindung 21 aufgesetzt. Das Schaufellaufrad 2 ist an eine sich etwa über die Breite der Kreiselpumpe 1 erstreckende zylindrische Hülse 16 angeformt, die einen großflächigen thermischen Kontakt mit der Pumpenwelle 4 aufweist. Auf der Außenseite der zylindrischen Hülse 16 sitzen Lager 10, die ein feststehendes Pumpengehäuse (5, 3, 5) auf der Pumpenwelle 4 drehbeweglich halten.

Das feststehende Pumpengehäuse (5, 3, 5) der Kreiselpumpe 1 umfaßt ein aus Edelstahl hergestelltes Pumpenmittelteil 3 und zwei stirnseitg davon angeordnete identische aus Polyamid hergestellte Pumpendeckel 5. Diese drei Bauteile werden mit Schrauben 14 verspannt und bilden mit dem Schaufellaufrad 2 die Kreiselpumpe 1.

Die Kühlflüssigkeit wird über eine im Pumpenmittelteil 3 radial angeordnete Kühlmittelsaugleitung 11 einem Innenraum 17 der Kreiselpumpe 1 zugeführt. Durch die Drehbewegung des Schaufellaufrades 2 wird die Kühlflüssigkeit beschleunigt in einen äußeren Ringraumsektor 18 der Kreiselpumpe 1 gefördert und von dort über eine kurze im Pumpenmittelteil 3 radial angeordnete Kühlmittelförderleitung 12 nach außen geführt.

Die Kreiselpumpe 1 ist mit Dichtringen 20 zwischen den Pumpendeckeln 5 und dem Schauffellaufrad 2 in zwei Radiusbereichen, einerseits an der zylindrischen Hülse 16 und andererseits an einer äußeren Dichtfläche 19, abgedichtet.

In Figur 2 ist gezeigt, daß zur Montage der Kreiselpumpe 1 das Pumpenmittelteil 3 in radialer Richtung geteilt ausgeführt ist. Die beiden Hälften des Pumpenmittelteiles 3 sind über tangential angeordnete Schrauben verbindbar.

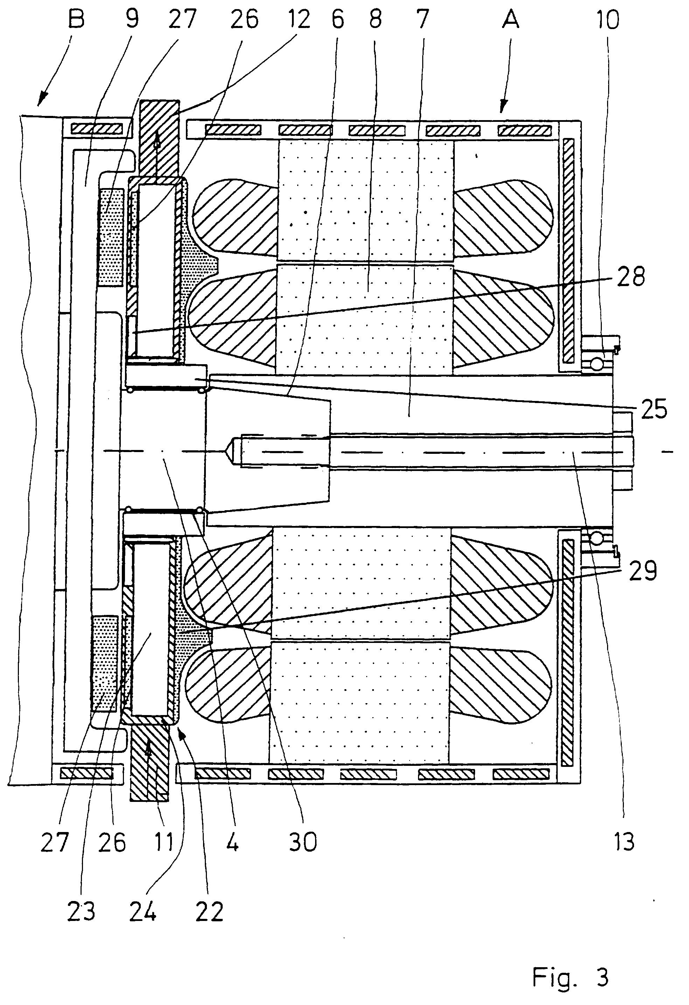

Figur 3 zeigt ein Ausführungsbeispiel mit als Magnetläuferpumpe 22 ausgebildeten Kühlmittelpumpe, die ebenfalls zwischen Antriebsmotor B und Generator A angeordnet ist. Die Magnetläuferpumpe 22 weist ein Pumpengehäuse 24 und ein drehbar darin angeordnetes Schaufellaufrad 23 auf. Das Schaufellaufrad 23 ist mit auf einer Kreisringfläche integrierten Permanentmagneten 26 ausgestattet. Gegenüberliegend zu diesen Permanentmagneten 26 befinden sich Permanentmagneten 27 auf einem vom Antriebsmotor angetriebenen Bauteil, beispielsweise einer Schwungmasse 9. Somit wird das Schaufellaufrad 23 der Magnetläuferpumpe 22 berührungslos von der Schwungmasse 9 angetrieben. Die Magnetläuferpumpe 22 wirkt als Kreiselpumpe.

Die Kühlmittelsaugleitung 11 führt in das Pumpengehäuse 24. Die Kühlmittelförderleitung 12 ist gegenüberliegend angeordnet.

Zur Verbesserung der Wärmeleitung ist zwischen dem Pumpengehäuse 24 und der Pumpenwelle 4 eine Gleitbuchse 25 angeordnet. Die Gleitbuchse 25, die beispielsweise als handelübliche Bronzeguß-Lagerbuchse ausgebildet ist, liegt innenseitig drehbar an der Pumpenwelle 4 an und ist außenseitig mit dem Pumpengehäuse 24 fest verbunden. In die Gleitfläche zwischen Gleitbuchse 25 und Pumpenwelle 4 wird auf geeignete Weise vorzusweise ein wärmeleitendes Gleitfett 30 eingebracht. Damit wird die Wärmeleitung zwischen drehender Pumpenwelle 4 und feststehender Gleitbuchse 25 verbessert und die Reibung verringert.

Zwischen dem geeigneten Widerlager an der drehbaren Schwungmasse 9 und dem feststehenden Pumpengehäuse 24 ist eine Distanzscheibe 28, vorzugsweise aus keramik, angeordnet, so daß die Anlaufeigenschaften der Magnetläuferpumpe verbessert werden.

Um die Kühlwirkung weiter zu verbessern, sind auf der dem Generator A zugewandten Seite des Pumpengehäuses 24 Kühlrippen 29 ausgebildet. Der durch die Drehbewegung des Generatorankers 8 erzeugte Luftstrom wird an den Kühlrippen 29 gekühlt. Damit wird die Betriebstemperatur des Generators A weiter gesenkt.

### BEZUGSZEICHENLISTE

- A: Generator
- B: Antriebsmotor
- 1: Kühlmittelpumpe (Kreiselpumpe)
- 2: Schaufellaufrad
- 3: Pumpenmittelteil
- 4: Pumpenwelle
- 5: Pumpendeckel
- 6: Konuspaßsitz
- 7: Generatorwelle
- 8: Generatoranker
- 9: Schwungmasse
- 10: Lager
- 11: Kühlmittelsaugleitung
- 12: Kühlmittelförderleitung
- 13: Schraube
- 14: Schraube
- 15: Antriebsmotorwelle
- 16: zylindrische Hülse
- 17: Innenraum
- 18: äußerer Ringraumsektor
- 19: äußere Dichtfläche
- 20: Dichtring
- 21: Feder-Nut-Verbindung
- 22: Magnetläuferpumpe
- 23: Schaufellaufrad
- 24: Pumpengehäuse
- 25: Gleitbuchse
- 26: Permanentmagnet
- 27: Permanentmagnet
- 28: Distanzscheibe
- 29: Kühlrippen
- 30: Gleitfett

## Patentansprüche

1. Stromerzeuger, insbesondere für Fahrzeuge, bestehend aus koaxial auf einer Welle (4, 7, 15) angeordnetem flüssigkeitsgekühlten Generator (A) und einem flüssigkeitsgekühlten Verbrennungsmotor als Antriebsmotor (B) sowie einer Pumpe für das flüssige Kühlmittel, **dadurch gekennzeichnet**, daß die Pumpe für das flüssige Kühlmittel auf der Welle (4, 7, 15) zwischen dem Generator (A) und dem Antriebsmotor (B) angeordnet ist.

2. Stromerzeuger nach Anspruch 1, **dadurch gekennzeichnet**, daß die Welle geteilt aus miteinander fluchtend verbundener Generatorwelle (7), Pumpenwelle (4) und Antriebsmotorwelle (15) ausgebildet ist.

3. Stromerzeuger nach Anspruch 2, **dadurch gekennzeichnet**, daß die Verbindung zwischen Generator- (7) und Pumpenwelle (4) als selbstzentrierender Konuspaßsitz (6) ausgebildet ist.

4. Stromerzeuger nach Anspruch 1, 2 oder 3, **dadurch gekennzeichnet**, daß die Kühlmittelpumpe als Magnetläuferpumpe (22) ausgebildet ist.

5. Stromerzeuger nach Anspruch 4, **dadurch gekennzeichnet**, daß die Magnetläuferpumpe (22) ein als Magnetläufer ausgebildetes Schaufellaufrad (23) und ein feststehendes Pumpengehäuse (24) mit daran angeschlossener Kühlmittelsaugleitung (11) und Kühlmitteldruckleitung (12) aufweist.

6. Stromerzeuger nach Anspruch 4 oder 5, **dadurch gekennzeichnet**, daß zwischen dem Pumpengehäuse (24) und der Welle (4, 7, 15) eine Gleitbuchse (25) zur Leitung der Wärme von der Welle (4, 7, 15) in das Pumpengehäuse (24) angeordnet ist.

7. Stromerzeuger nach einem der Ansprüche 1 bis 6, **dadurch gekennzeichnet**, daß die Kühlmittelpumpe eine Kreiselpumpe (1), insbesondere eine selbstansaugende Kreiselpumpe, ist.

8. Stromerzeuger nach Anspruch 7, **dadurch gekennzeichnet**, daß die Kreiselpumpe (1) ein feststehendes Pumpengehäuse (5, 3, 5) mit Kühlmittelsaugleitung (11) und Kühlmittelförderleitung (12) und ein drehfest mit der Pumpenwelle (4) verbundenes Schaufellaufrad (2) aufweist, wobei die Kühlmittelsaugleitung (11) in einer senkrecht zur Pumpenwelle (4) liegenden Ebene in das Pumpengehäuse (5, 3, 5) bis an den radial innenliegenden Bereich des Schaufellaufrades (2) hineinführt.

9. Stromerzeuger nach Anspruch 8, **dadurch gekennzeichnet**, daß das Pumpengehäuse (5, 3, 5) aus einem Pumpenmittelteil (3) und zwei, vorzugsweise identischen, Pumpendeckeln (5) zusammengesetzt ist, wobei die Kühlmittelsaugleitung (11) und die Kühlmittelförderleitung (12) am Pumpenmittelteil (3) angeordnet sind.

10. Stromerzeuger nach Anspruch 9, **dadurch gekennzeichnet**, daß das Pumpenmittelteil (3) vorzugsweise aus Edelstahl und die Pumpendeckel (5) aus Polyamid hergestellt sind.

## Claims

1. Power-generator unit, in particular for vehicles, consisting of a fluid-cooled generator (A) which is disposed coaxially on a shaft (4, 7, 15) and of a fluid-cooled internal combustion engine as a drive motor (B) as well as of a pump for the fluid coolant, characterized in that the pump for the fluid coolant is disposed on the shaft (4, 7, 15) between the generator (A) and the drive motor (B).

2. Power-generator unit according to Claim 1, characterized in that the shaft is constructed in parts from a generator shaft (7), a pump shaft (4) and a drive motor shaft (15) which are connected to one another such that they are aligned.

3. Power-generator unit according to Claim 2, characterized in that the connection between the generator shaft (7) and pump shaft (4) is in the form of a self-centring conical-joint socket (6).

4. Power-generator unit according to Claim 1, 2 or 3, characterized in that the coolant pump is in the form of a magnetic rotor pump (22).

5. Power-generator unit according to Claim 4, characterized in that the magnetic rotor pump (22) comprises an impeller (23), which is in the form of a magnetic rotor, and a stationary pump housing (24) with a coolant intake pipe (11) and coolant delivery pipe (12) connected to said housing.

6. Power-generator unit according to Claim 4 or 5, characterized in that a slide bush (25) for conducting the heat from the shaft (4, 7, 15) into the pump housing (24) is disposed between the pump housing (24) and the shaft (4, 7, 15).

7. Power-generator unit according to any one of Claims 1 to 6, characterized in that the coolant pump is a centrifugal pump (1), in particular a naturally aspirated centrifugal pump.

8. Power-generator unit according to Claim 7, characterized in that the centrifugal pump (1) comprises a stationary pump housing (5, 3, 5) with a coolant intake pipe (11) and a coolant delivery pipe (12) and an impeller (2) connected to the pump shaft (4) such that it is fixed for rotation, the coolant intake pipe (11) leading in a plane lying perpendicular to the pump shaft (4) into the pump housing (5, 3, 5) as far as the radially inward region of the impeller (2).

9. Power-generator unit according to Claim 8, characterized in that the pump housing (5, 3, 5) is composed of a pump central part (3) and two, preferably identical, pump covers (5), the coolant intake pipe (11) and the coolant delivery pipe (12) being disposed on the pump central part (3).

10. Power-generator unit according to Claim 9, characterized in that the pump central part (3) is preferably made of high-grade steel and the pump covers (5) are made of polyamide.

## Revendications

1. Génératrice électrique notamment pour les véhicules automobiles, comprenant une génératrice (A) refroidie par liquide et comme moteur (B) un moteur à combustion interne refroidi par liquide, tous deux montés coaxialement sur un axe (4, 7, 15) ainsi qu'une pompe pour le liquide de refroidissement, caractérisée en ce que la pompe de liquide de refroidissement est montée sur l'axe (4, 7, 15) entre la génératrice (A) et le moteur (B).

2. Génératrice selon la revendication 1, caractérisée en ce que l'axe comprend plusieurs parties, reliées de manière alignée, à savoir l'axe de génératrice (7), l'axe de pompe (4) et l'axe de moteur (15).

3. Génératrice électrique selon la revendication 2, caractérisée en ce que la liaison entre l'axe (7) de la génératrice et l'axe (4) de la pompe est constituée par un emmanchement conique (6) à centrage automatique.

4. Génératrice électrique selon la revendication 1, 2 ou 3, caractérisée en ce que la pompe de liquide de refroidissement est une pompe à rotor magnétique 22.

5. Génératrice électrique selon la revendication 4, caractérisée en ce que la pompe à rotor magnétique (22) est une pompe à ailettes (23) à rotor magnétique et comprend un corps de pompe (24) fixe, portant la conduite d'aspiration de liquide de refroidissement (11) et la conduite de pression du liquide de refroidissement (12).

6. Génératrice électrique selon la revendication 4 ou 5, caractérisée en ce qu'entre le corps de pompe (24) et l'axe (4, 7, 15), il y a un manchon lisse (25) pour évacuer la chaleur de l'axe (4, 7, 15) dans le corps de pompe (24).

7. Génératrice électrique selon l'une des revendications 1 à 6, caractérisée en ce que la pompe à liquide de refroidissement est une pompe centrifuge (1), notamment une pompe centrifuge auto-amorçante.

8. Génératrice électrique selon la revendication 7, caractérisée en ce que la pompe centrifuge (1) comprend un corps de pompe fixe (5, 3, 5) avec une conduite d'aspiration de liquide de refroidissement (11) et une conduite de sortie de liquide de refroidissement (12) ainsi qu'un rotor à ailettes (2) relié solidairement à l'axe (4) de la pompe, la conduite d'aspiration de liquide de refroidissement (11) étant introduite dans un plan perpendiculaire à l'axe (4) de la pompe dans le corps de pompe (5, 3, 5) jusque dans la zone du rotor à ailettes situé radialement à l'intérieur.

9. Génératrice électrique selon la revendication 8, caractérisée en ce que le corps de pompe (5, 3, 5) se compose d'une partie centrale (3) et de deux panneaux de pompe (5) de préférence identiques, la conduite de liquide de refroidissement (11) et la conduite de sortie de liquide de refroidissement (12) se trouvant dans la partie centrale 3 de la pompe.

10. Génératrice électrique selon la revendication 9, caractérisée en ce que la partie centrale (3) de la pompe est de préférence en acier inoxydable et les panneaux (5) sont en polyamide.
